(19) Europäisches Patentamt
European Patent Office
Office européen des brevets

(11) Veröffentlichungsnummer: **0 001 215**
**A1**

# (12) EUROPÄISCHE PATENTANMELDUNG

(21) Anmeldenummer: **78100709.1**

(22) Anmeldetag: **21.08.78**

(51) Int. Cl.$^2$: **C 08 G 16/02**

(30) Priorität: **03.09.77 DE 2739843**

(43) Veröffentlichungstag der Anmeldung:
**04.04.79 Patentblatt 79/7**

(84) Benannte Vertragsstaaten:
**BE CH DE FR GB**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Mitschke, Karl-Heinz, Dr.**
**Am Berg 22**
**D-5068 Odenthal(DE)**

(72) Erfinder: **Schliebs, Reinhard, Dr.**
**Roggendorfstrasse 63**
**D-5000 Köln 80(DE)**

## (54) Höhermolekulare Phosphorsäure-bzw. Phosphonsäurearylester und ein Verfahren zu ihrer Herstellung.

(57) Die vorliegende Erfindung betrifft höhermolekulare Phosphor- bzw. Phosphonsäurearylester, die durch Umsetzung von Phosphorsäure- bzw. Phosphonsäurearylester mit Formaldehyd bzw. Paraformaldehyd oder Trioxan hergestellt werden. Das Verfahren zur Herstellung dieser höhermolekularen Phosphor- bzw. Phosphonsäurearylestern ist dadurch gekennzeichnet, daß Phosphor- bzw. Phosphonsäurearylester gegebenenfalls gelöst in einem inerten Lösungsmittel bei Temperaturen zwischen etwa 10°C und 120°C in Gegenwart von Schwefelsäure mit Formaldehyd bzw. Paraformaldehyd oder Trioxan umgesetzt werden.

EP 0 001 215 A1

BEZEICHNUNG GEÄNDERT
siehe Titelseite

BAYER AKTIENGESELLSCHAFT
Zentralbereich
Patente, Marken und Lizenzen

5090 Leverkusen, Bayerwerk
Br/Th

Verfahren zur Herstellung von höhermolekularen Phosphorsäure- bzw. Phosphonsäurearylestern

Die vorliegende Erfindung betrifft ein Verfahren zur Herstellung von höhermolekularen Phosphorsäure- bzw. Phosphonsäurearylestern durch Umsetzung der entsprechenden Ester mit Formaldehyd bzw. mit Paraformaldehyd oder Trioxan in Gegenwart von Schwefelsäure.

Arylester der Phosphorsäure und von - meist aromatischen - Phosphonsäuren werden als Flammschutzmittel bei der Herstellung von Hartpapieren und von Polyestern, als flammhemmende Weichmacher in Kunststoffen wie PVC, als Zusatz zu Kunststoffen wie Polyphenylenoxiden und als wenig brennbare Hydrauliköle eingesetzt.

Typische, im technischen Maßstab hergestellte Arylphosphate sind z.B. Triphenylphosphat, Diphenylkresylphosphat, Trikresylphosphat, Isopropylphenyl-phenyl-phosphate und, in kleinerem Umfang, kernchlorierte und - bromierte Arylphosphate.

Obwohl diese Arylphosphate im allgemeinen bei Raumtemperatur einen relativ kleinen Dampfdruck besitzen, stört doch bei manchen Anwendungen ihre nicht zu vernachlässigende Flüchtigkeit. Weiterhin ist ihre Viskosität für manche technischen Zwecke nicht ausreichend hoch, so z.B. bei der Tränkung von Filtermaterialien.

Es hat nicht an Versuchen gefehlt, höhermolekulare Arylphosphate oder Phosphonate herzustellen. Typisch dafür ist z.B. die Umsetzung von Benzolphosphonsäuredichlorid mit Bisphenol A (vgl z.B. Jap. Pat.-Anm. 49-118 914), wobei die Produkte saure oder phenolische Endgruppen besitzen. Solche Reaktionen lassen sich nur in Gegenwart von Säureakzeptoren durchführen, da der sonst entstehende Chlorwasserstoff das Bisphenol A zerstören würde.

Analoge Produkte erhält man, wenn man Triarylphosphate oder Phosphonsäurediarylester mit zweiwertigen Phenolen, besonders Bisphenol A, umsetzt.
Solche Reaktionen werden so durchgeführt, daß man den Aryl-(Phenyl-)ester in Gegenwart von alkalischen Katalysatoren bei hohen Temperaturen mit dem zweiwertigen Phenol zur Reaktion bringt, wobei das sich bildende einwertige Phenol destillativ entfernt wird. Auch diese Umesterungsreaktion besitzt verschiedene Nachteile. wie z.B. die Notwendigkeit der Entfernung der durch die alkalischen Katalysatoren entstehenden Estersalze und der letzen Reste von einwertigem Phenol.

Gegenstand der vorliegenden Anmeldung ist nun ein Verfahren zur Herstellung von höhermolekularen Phosphor- bzw. Phosphonsäurearylestern, das dadurch gekennzeichnet ist, daß Phosphorsäure- bzw. Phosphonsäurearylester, gegebenenfalls gelöst in einem inerten Lösungsmittel, bei Temperaturen zwischen etwa 10°C und 120°C in Gegenwart von Schwefelsäure mit Formaldehyd bzw. mit Paraformaldehyd oder Trioxan umgesetzt werden.

Überraschend hat es sich gezeigt, daß man höhermolekulare Phosphor- bzw. Phosphonsäurearylester erfindungsgemäß auf einfache Weise aus leicht zugänglichen Substanzen herstellen kann, ohne die erwähnten Nachteile inkauf nehmen zu müssen. Beim erfindungsgemäßen Verfahren werden die Ausgangsphosphate bzw. Phosphonate über Methylenbrücken verknüpft, etwa gemäß folgendem allgemeinen Formelschema (für ein Formaldehyd-Molekül und 2 Phosphorsäureester-Moleküle; für höher kondensierte Moleküle gilt ein entsprechendes Schema):

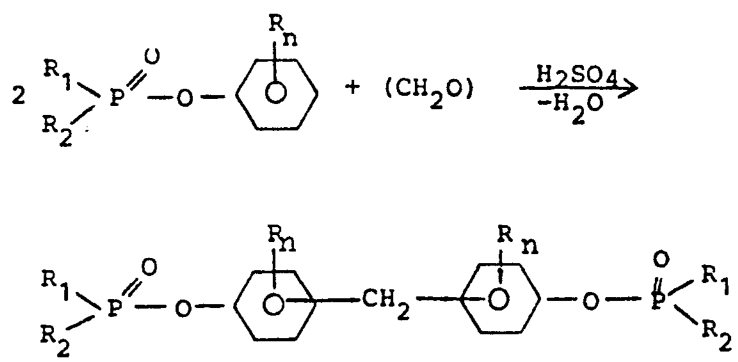

worin

R für Wasserstoff, einen Alkylrest mit 1-6 C-Atomen, Halogen, einen Aryloxyrest, einen Arylrest

$R_1$ für $OC_6H_mR_n$, wobei m + n = 5 ist, Alkyl, Halogenalkyl oder Aryl (gegebenenfalls substituiert) und

$R_2$ für $OC_6H_mR_n$ steht, wobei m + n = 5 ist,

n = 1 - 3.

Selbstverständlich kann die Menge an Formaldehyd bzw. von dessen Derivaten über das im Formelschema angegebene Verhältnis hinaus erhöht werden. Man erhält dann höhermolekulare, zum Teil vernetzte Materialien.
Die Reaktion ist mit Sicherheit statistisch, d.h., wenn man Triarylphosphate so umsetzt, daß auf zwei Mol Triarylphosphat ein Mol Formaldehyd kommt, kann man folgende Produkte im Reaktionsgemisch erwarten: Unreagiertes Triarylphosphat, zwei Moleküle Triarylphosphat über eine Methylenbrücke verknüpft und, entsprechend dem Anteil an unreagiertem Triarylphosphat, höhermolekularere Gebilde. Auch mehrfach substituierte Verbindungen sind möglich.
Die erhaltenen Reaktionsprodukte sind - je nach Anzahl der eingeführten Methylenbrücken viskose Öle, klebrige oder sogar spröde Harze.

Es ist besonders überraschend, daß sich das erfindungsgemäße Verfahren in der angegebenen Form überhaupt durchführen läßt. An sich wäre zu erwarten gewesen, daß die Arylester, die sich in der Schwefelsäure exotherm auflösen, vor allem in Gegenwart des bei der Reaktion entstehenden Wassers und bei den während der Reaktion auftretenden Temperaturen schnell zu Phenol und Estersäuren bzw. freier Phosphorsäure bzw. Phosphonsäure verseift werden.

Wie die in den Beispielen angegebenen Ausbeuten zeigen, findet die Verseifung, wenn überhaupt, nur in sehr geringem Umfang statt. Erforderlich ist dazu aber, daß das Verhältnis von Schwefelsäure zu Arylester ein gewisses Mindestverhältnis überschreitet. Die Mindestmenge an Schwefelsäure pro Mol Arylester hängt unter anderem ab von dem Verhältnis Arylester zu eingesetztem Formaldehyd. Zweckmäßigerweise setzt man pro Mol Arylester wenigsten 1,5 Mol Schwefelsäure ein, wenn man auf ein Mol Arylester 0,5 Mol Formaldehyd verwendet. Günstiger ist es, etwa im Verhältnis von 2 Mol Schwefelsäure pro Mol Arylester zu arbeiten. Größere Mengen an Schwefelsäure können zwar verwendet werden, bringen aber keinen Vorteil. Anders ist es, wenn man die Menge des Formaldehyds relativ zum Arylester über den genannten Wert hinaus erhöht. Es ist dann zweckmäßig die Mengen an Schwefelsäure etwa proportional der Formaldehydmenge zu erhöhen.

Das erfindungsgemäße Verfahren wird bevorzugt mit Paraformaldehyd oder auch mit Trioxan als Formaldehydquelle durchgeführt. Monomeres Formaldehyd kann ebenfalls eingesetzt werden, doch kann dies in manchen Fällen zu aufwendig sein.

Die für das erfindungsgemäße Verfahren eingesetzte Schwefelsäure soll bevorzugt eine Konzentration von etwa 95 bis 100 % aufweisen.

Grundsätzlich ist es auch möglich, andere Säuren, z.B. Chlorwasserstoff einzusetzen; doch ergeben sich dabei Nachteile (z.B. Bildung von sehr toxischen Zwischenprodukten), die die Verwendung dieser Säuren in vielen Fällen nicht ratsam erscheinen lassen.

Als Triarylphosphat oder Diarylphosphonat kommen bevorzugt diejenigen zum Einsatz, die technisch gut zugänglich sind. Dies sind vor allem:

Triphenylphosphat
Diphenyl-kresylphosphat
Trikresylphosphat
Isopropylphenyl-phenylphosphat
Chloraryl-kresylphosphate
Bromaryl-kresylphosphate
Methanphosphonsäurediphenylester
Methanphosphonsäurephenylkresylester
Chlormethanphosphonsäuredikresylester
Benzolphosphonsäurediphenylester
Benzolphosphonsäurebis(dichlorphenyl)ester

Das erfindungsgemäße Verfahren eignet sich darüber hinaus aber auch für andere Phosphate bzw. Phosphonate.

Falls Lösungsmittel verwendet werden, sind vor allem diejenigen geeignet, die unter den Reaktionsbedingungen stabil sind. Dies sind vor allem die chlorierten Kohlenwasserstoffe, wie z.B. Dichlormethan, Dichloräthan,

Dichlorpropan, Tetrachloräthan und ähnliche.

Die Reihenfolge der Zugabe der Komponenten in die Reaktion wird bei kontinuierlicher Fahrweise so gehandhabt, daß alle drei Komponenten z.B. flüssiges oder geschmolzenes Triarylphosphat oder -phosphonat und Schwefelsäure über Dosierpumpen, Paraformaldehyd über eine Dosierwaage gleichzeitig zugegeben werden. Bei diskontinuierlicher Fahrweise bzw. der Vorvermischung der Komponenten ist folgendes zu beachten: Während die Mischung der Phosphorsäure- bzw. Phosphonsäurearylester mit der Schwefelsäure in einem breiten Temperaturbereich stabil ist, und man bei Zugabe des Formaldehyds unter sonst gleichen Bedingungen reproduzierbare Reaktionsprodukte (gemessen an der Viskosität der Endprodukte nach der Aufarbeitung) erhält, ist dies bei inverser Zugabe nicht der Fall. Mischt man z. B. den Formaldehyd - z.B. als Paraformaldehyd - mit der Schwefelsäure, so kühlt sich diese Mischung zunächst ab, um anschließend warm zu werden. Setzt man diese Mischung nun mit der Phosphorkomponente um, so stellt man fest, daß die Viskosität der Endprodukte deutlich vom Alter dieser Mischung abhängt. Je länger die Mischung gestanden hat, desto geringer ist die erzielte Viskosität.

Die bevorzugten Arten die Reaktion zu führen, sind also: Mischung aller drei Komponenten gleichzeitig oder Mischung der Säure mit der Phosphorverbindung und Zugabe von Formaldehyd oder Mischung von Phosphorverbindung und Formaldehyd und Zugabe zur Säure oder Zugabe von Säure.

Die Reaktionstemperatur, die etwa zwischen $10^{o}C$ und $120^{o}C$ liegen soll, ist nicht besonders kritisch. Während die (leicht exotherme) Reaktion auch schon bei Raumtemperatur und niedriger abläuft, ist damit ein unnötiger Kühlaufwand verbunden. Temperaturen oberhalb $100^{o}C$ geben zwar brauchbare, aber manchmal stark gefärbte Produkte. Besonders gute Ergebnisse werden erhalten in einem Temperaturbereich etwa zwischen 40 und $80^{o}C$, der also bevorzugt wird.

Die Reaktionszeit ist ebenfalls keine besonders kritische Größe. Während Hinweise dafür vorliegen, daß die Reaktion schon in weniger als einer halben Stunde nach Zusammengeben der Komponenten beendet ist, dürfte aus praktischen Gründen eine Reaktionsdauer von 0,5-1 Std. optimal sein. Längere Reaktionszeiten von z.B. bis zu 4 Std. schaden aber nicht.

Die Aufarbeitung des Reaktionsgemisches kann auf folgender Art und Weise erfolgen: Falls bei der Reaktion kein Lösungsmittel eingesetzt wurde, wird der ausreagierte Ansatz mit 100-200 ml Lösungsmittel pro 0,5 Mol Phosphorverbindung, bevorzugt Methylenchlorid oder Dichloräthan, versetzt.

Anschließend wird soviel Wasser zugegeben, daß sich zwei Phasen ausbilden (ca. 50 ml bezogen auf 0,5 Mol Phosphorverbindung). Die organische Phase wird anschließend ca. 1 - 2 mal mit Wasser und anschließend mehrere Male mit einer sehr verdünnten Alkalilösung (Natronlauge, Bicarbonat) gewaschen. Anschließend folgt abermals eine Wäsche mit ionenfreiem Wasser. Zum Schluß wird das Lösungsmittel, vorzugsweise im Vakuum abgezogen.

Die Charakterisierung der erhaltenen höhermolekularen Triarylphosphate bzw. Diarylphosphonate kann außer durch die Bestimmung der Viskosität oder durch Vollanalyse auch noch durch physikalisch-chemische Untersuchungsmethoden erfolgen. Zur Abhängigkeit der Viskosität vom Verhältnis Triphenylphosphat/Paraformaldehyd gibt die beiliegende Figur Auskunft. In der Figur ist auf der Abszisse die Menge an Formaldehyd pro 0,5 Mol Triphenylphosphat angegeben; die Ordinate gibt die Viskosität des Reaktionsproduktes in cP bei 20°C an. Geeignet sind weiterhin die Aufnahme des Massenspektrums, vor allem bei den weniger hochmolekularen Materialien. So findet man z.B. bei der Umsetzung nach Beispiel 1 die Molmasse 664 als Hauptkomponente.

Im NMR-Spektrum läßt sich durch Auszählen der Methylenprotonen (shift-Lage 3,7 bis 3,9 ppm) relativ zu den aromatischen Protonen ebenfalls eine Aussage über die Anzahl der Methylenbrücken machen. (So ist z.B. beim verbrückten Triphenylphosphat das Verhältnis aromatischer Protonen zur Protonenanzahl der Methylenbrücke 15:1, woraus sich ergibt, daß zwei Triphenylphosphatreste mit einer Methylengruppe verbrückt sind.

Anhand der folgenden Beispiele soll die Erfindung noch näher erläutert werden.

| Beispiel Nr. | Reaktionskomponenten | | | Einsatzmengen | | | | | | Reaktionsbeding. | | | | Viskosität [dyn. cp] |
|---|---|---|---|---|---|---|---|---|---|---|---|---|---|---|
| | | | | g | mol | g | mol | g | mol | Reakt. temp. [°C] | Reakt. zeit [h] | Vorlage | Zugabe von | |
| | 1 | 2 | 3 | 1 | 1 | 2 | 2 | 3 | 3 | | | | | |
| 1 | TP | PFA | $H_2SO_4$ | 163 | 0,5 | 7,5 | 0,25 | 150 | 1,5 | 70 | 0,5 | TP/$H_2SO_4$ | PFA | 6 200 |
| 2 | TP | PFA | $H_2SO_4$ | 163 | 0,5 | 7,5 | 0,25 | 75 | 0,75 | 70 | 0,5 | TP/$H_2SO_4$ | PFA | 5 100 |
| 3 | TP | PFA | $H_2SO_4$ | 163 | 0,5 | 7,5 | 0,25 | 200 | 2,0 | 70 | 0,5 | TP/$H_2SO_4$ | PFA | 5 900 |
| 4 | TP | PFA | $H_2SO_4$ | 163 | 0,5 | 7,5 | 0,25 | 100 | 1,0 | 70 | 4,0 | TP/$H_2SO_4$ | PFA | 5 600 |
| 5 | TP | PFA | $H_2SO_4$ | 163 | 0,5 | 7,5 | 0,25 | 100 | 1,0 | 40 | 2,0 | TP/PFA | $H_2SO_4$ | 5 500 |
| 6 | TP | PFA | $H_2SO_4$ | 163 | 0,5 | 7,5 | 0,25 | 100 | 1,0 | 80 | 0,5 | TP/$H_2SO_4$ | PFA | 5 800 |
| 7 | TP | PFA | $H_2SO_4$ | 163 | 0,5 | 8,5 | 0,28 | 100 | 1,0 | 70 | 1,0 | TP/$H_2SO_4$ | PFA | 11 000 |
| 8 | TP | PFA | $H_2SO_4$ | 163 | 0,5 | 2,5 | 0,08 | 100 | 1,0 | 70 | 1,0 | TP/$H_2SO_4$ | PFA | 1 000 |
| 9 | DPK | PFA | $H_2SO_4$ | 170 | 0,5 | 7,5 | 0,25 | 100 | 1,0 | 60 | 1,0 | DPK/$H_2SO_4$ | PFA | 21 000 |
| 10 | DPK | Trioxan | $H_2SO_4$ | 170 | 0,5 | 7,5 | 0,25 | 100 | 1,0 | 60 | 1,0 | DPK/$H_2SO_4$ | Trioxan | 21 000 |
| 11 | TKP | PFA | $H_2SO_4$ | 184 | 0,5 | 7,5 | 0,25 | 100 | 1,0 | 60 | 1,0 | TKP/$H_2SO_4$ | PFA | 30 000 |
| 12 | D | PFA | $H_2SO_4$ | 235 | 0,5 | 7,5 | 0,25 | 100 | 1,0 | 50 | 1,0 | D/$H_2SO_4$ | PFA | 72 000 |
| 13 | A | PFA | $H_2SO_4$ | 175 | 0 5 | 7,5 | 0,25 | 100 | 1,0 | 50 | 1,0 | A/$H_2SO_4$ | PFA | 21 000 |
| 14 | B | PFA | $H_2SO_4$ | 185 | 0,5 | 7,5 | 0,25 | 100 | 1,0 | 50 | 1,0 | B/$H_2SO_4$ | PFA | 33 000 |
| 15 | C | PFA | $H_2SO_4$ | 124 | 0,5 | 7,5 | 0,25 | 100 | 1,0 | 50 | 1,0 | C/$H_2SO_4$ | PFA | 3 100 |
| 16 | C | PFA | $H_2SO_4$ | 124 | 0,5 | 15 | 0,5 | 100 | 1,0 | 50 | 1,0 | C/$H_2SO_4$ | PFA | Harz |

Die in der Tabelle benutzten Symbole bedeuten im einzelnen:

TP = Triphenylphosphat
DKP = Diphenyl-kresyl-phosphat
TKP = Trikresylphosphat

A = Phenyl-isopropylphenyl-phosphat - A (Viskosität 90 cP bei 20°C, Dichte 1,16)
B " Phenyl-isopropylphenyl-phosphat - B (Viskosität 150 cP bei 20°C, Dichte 1,13)
C = Methanphosphonsäurediphenylester
D = teilbromiertes Diphenyl-kresyl-phosphat mit ca. 29 % Br.
PFA = Paraformaldehyd

Alle in der Tabelle aufgeführten Versuche wurden in einer Rührapparatur ausgeführt, welche aus einem 500 ml Dreihalskolben, Thermometer und einem gut wirksamen Rührer bestand.

Aufarbeitung:

Die ausreagierten Rohprodukte werden mit 170 ml Methylenchlorid versetzt. Zu dieser klaren Lösung gibt man soviel Wasser (ca. 50 ml), bis eine trübe Mischung entsteht. Die sich dann als untere Phase absetztende Schwefelsäure hat einen Gehalt von 60-70 Gewichtsprozent. Die org. Phase wird nun bei Zimmertemperatur dreimal mit je 200 ml dest. Wasser gewaschen. Der zweiten Wäsche fügt man bis zur neutralen Reaktion etwas verdünnte Natronlauge zu. Das im Vakuum vom Lösungsmittel befreite Produkt läßt sich, falls erforderlich, über eine heizbare Nutsche filtrieren. Die Ausbeuten liegen in allen Fällen über 95 % d. Theorie. Die Säurerückgewinnung beträgt 90-95 % der Einsatzmenge. Die verdünnte Säure kann wieder aufbereitet werden.

Patentansprüche:

1. Verfahren zur Herstellung von höhermolekularen Phosphor- bzw. Phosphonsäurearylestern, dadurch gekennzeichnet, daß Phosphorsäure- bzw. Phosphonsäurearylester, gegebenenfalls gelöst in einem inerten Lösungsmittel, bei Temperaturen zwischen etwa 10°C und 120°C in Gegenwart von Schwefelsäure mit Formaldehyd bzw. Paraformaldehyd oder Trioxan umgesetzt werden.

2. Höhermolekulare Phosphor- bzw. Phosphonsäurearylester, hergestellt durch Umsetzung von Phosphorsäure- bzw. Phosphonsäurearylestern mit Formaldehyd bzw. Paraformaldehyd oder Trioxan.

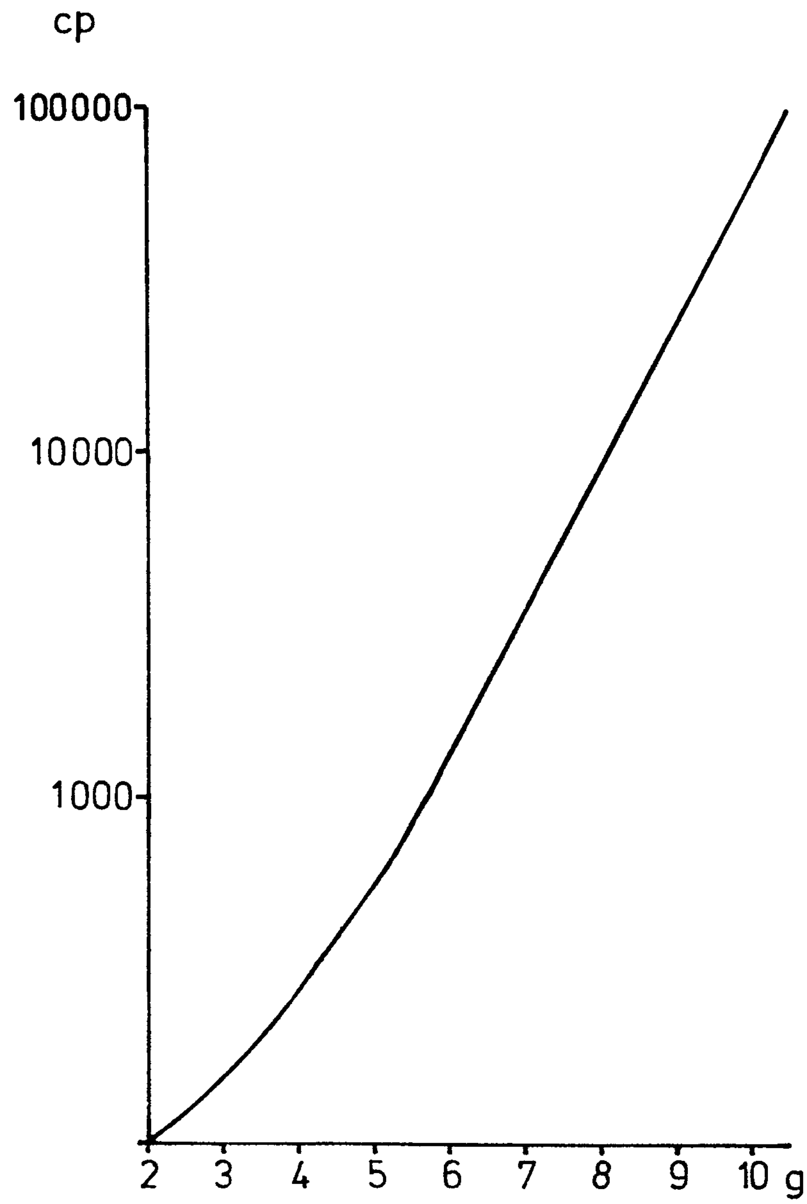
cp
100000
10000
1000
2
3
4
5
6
7
8
9
10
g

0001215
Nummer der Anmeldung

Europäisches Patentamt

# EUROPÄISCHER RECHERCHENBERICHT

EP 78 10 0709

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 495 340 (ALBERT)<br>* Patentanspruch * | 1,2 |
| X | DE - C - 738 692 (JOH.A. BENCKISER)<br>* Patentansprüche; Seite 1, Zeilen 44 und 46-48; Seite 2, Zeilen 1-4 * | 1,2 |
| X | DE - A - 1 420 824 (WALKER)<br>* Patentansprüche * | 1-2 |
| A | CHEMICAL ABSTRACTS, vol. 73, 99566f, (1970)<br>* Die ganze Zusammenfassung * | |

KLASSIFIKATION DER ANMELDUNG (Int.Cl.²)

C 08 G 16/02

RECHERCHIERTE SACHGEBIETE (Int. Cl.²)

C 08 G 16/02
C 08 G 8/28
C 07 F 9/40

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 1-11-1978 | DERAEDT |